# EUROPEAN PATENT SPECIFICATION

(11) **EP 1 043 434 B1**
(45) Date of publication and mention of the grant of the patent: **17.03.2004**
(21) Application number: 99304730.7
(22) Date of filing: 17.06.1999
(51) Int. Cl.: D03D 27/00, A63H 3/02, B32B 5/26

(54) **A pile fabric for a sewn toy**
Polgewebe für genähtes Spielzeug
Tissu à poils pour un jouet cousu

(30) Priority: 02.04.1999 KR 9911582
(43) Date of publication of application: 11.10.2000
(73) Proprietor: Woo Woo Trading Co. Ltd., Seoul (KR)
(72) Inventor: Choi, Man-Ho, Songpa-ku, Seoul (KR)
(74) Representative: Neill, Alastair William

(56) References cited:
- US-A- 4 170 086
- US-A- 5 002 511
- US-A- 5 006 089

## Description

### BACKGROUND OF THE INVENTION

### Field of the Invention

The present invention relates generally to a pile fabric for a sewn toy.

### Description of the Prior Art

Conventionally, there are many kinds of pile fabrics used for a sewn toy. The pile fabric uses a pile yarn in a general fabric, and a sewn toy is made of the pile fabric.

However, since the pile yarn is made of a fiber yarn in the present sewn toys, a conventional sewn toy using this pile yarn is not remarkably superior as compared to a sewn toy made of a general fabric.

A conventional art related to this technique has been described in Japanese Patent (Unexamined) no. 2510527. The Japanese Patent describes a fiber structure of a gold color. A golden gloss film is colored on a surface of the fiber structure, and the fiber structure has a golden gloss. However, the process of coloring the gold color onto the fiber is very difficult, and many processes are required to manufacture this fiber structure.

### Summary of the Invention

The present invention is directed to a metal effect pile fabric for a sewn toy that substantially obviates the above-described problem due to limitations and disadvantages of the related art.

It is an object of the present invention to provide a metal effect pile fabric for a sewn toy, using a metal effect pile yarn as a fabric when manufacturing a sewn toy, and thus achieves a sewn toy having various colors and various shapes according to various kinds of metal effect pile yarns.

In order to realize the above object, the metal effect pile fabric uses various metal effect pile yarns having various colors such as a gold color, silver color, and blond color etc. and the pile yarn may have a flat form or a twisted form.

Once the sewn toy is manufactured by using the metal effect pile fabric using the metal effect pile yarn, a very special sewn toy having a specific color and a specific shape is obtained.

The invention relates to a metal effect pile fabric for a sewn toy, which uses a metal effect pile yarn made of both a polyester film and a nylon mixed material as a fabric when manufacturing a sewn toy by using a sewing machine, and thus enhances a commercial value of the sewn toy according to various kinds of metal effect pile yarns used in a metal effect pile fabric.

The metal effect pile fabric for a sewn toy preferably uses a metal effect pile yarn made of a polyester film 60% and a nylon mono 20D 40% in manufacturing a fabric. The metal effect pile yarn may have a gold color or a silver color, and produces a metal effect. A thin sponge plate is attached on a back side of the metal effect pile fabric by using an adhesive agent. To prevent sliding during sewing and to maintain a stable sewing, a gauze (having 1mm spacing) made of a polyurethane is attached to a lowermost side of the metal effect pile fabric.

Additional features and advantages of the invention will be set forth in the description which follows, and in part will be apparent from the description, or may be learned by practice of the invention. The objective and other advantages of the invention will be realized and attained by the structure particularly pointed out in the written description and claims hereof as well as the appended drawing.

It is to be understood that both the foregoing general description and the following detailed description are exemplary and explanatory and are intended to provide further explanation of the invention as claimed.

### Brief Description of the Drawings

The accompanying drawing, which is included to provide a further understanding of the invention and is incorporated in and constitute a part of the specification, illustrates an embodiment of the invention and together with the description serve to explain the principles of the drawing:

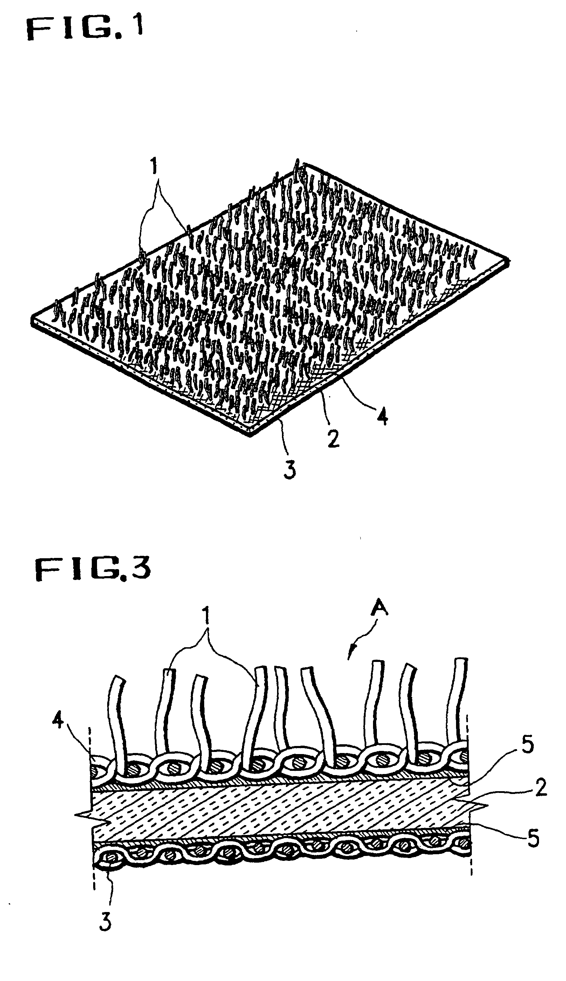

Figure 1 is a perspective view of a metal effect pile fabric according to the present invention;

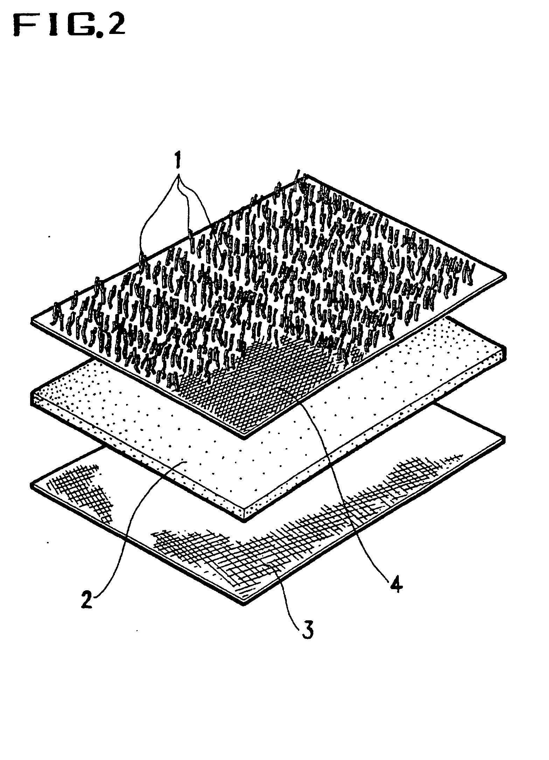

Figure 2 is a fragmentary perspective view of a metal effect pile fabric according to the present invention;
Figure 3 is a cross-sectional view of a metal effect pile fabric according to the present invention; and
Figure 4 is a sewn toy using a metal effect pile fabric according to the present invention.

### Detailed Description of the Preferred Embodiment

Reference will now be made in detail to the preferred embodiment of the present invention, examples of which are illustrated in the accompanying drawing.

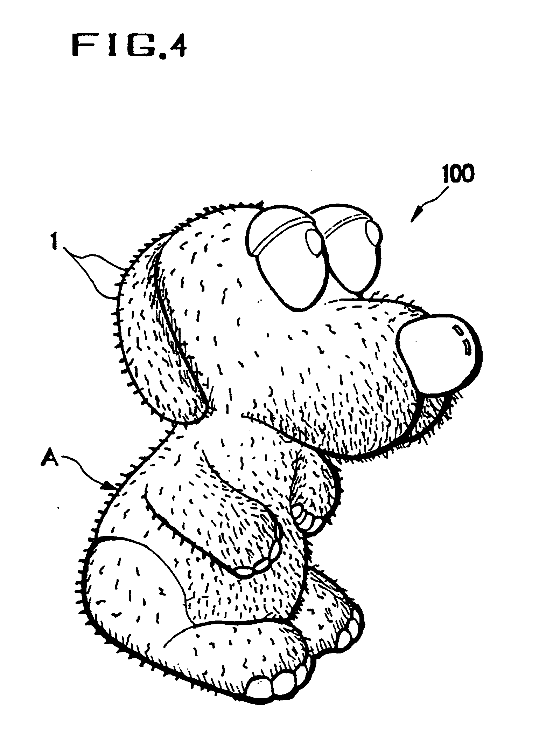

Figure 3 is a cross-sectional view of a metal effect pile fabric according to the present invention.

Referring to Figure 3, a base structure 4 uses a general fiber yarn together with a metal effect pile yarn 1. The metal effect pile yarn 1 has a gold color or a silver color so as to obtain a metal effect, and is made of a polyester film 60% and a nylon monofilament 20D 40%. A thin sponge plate 2 is attached on a back side of the base structure 4 of the metal effect pile fabric A by using an adhesive agent 5. To prevent sliding during sewing and to maintain a stable sewing, a gauze 3 as of a polyurethane of 1mm spacing is attached to the bottom of the sponge plate 2 by the adhesive agent 5.

To prevent a separation between the metal effect pile yarn 1 and the base structure 4, the sponge plate 2 for fixing a knot between the bottom of the base structure 4 and the metal effect pile yarn 1 is attached on the base structure 4 by the adhesive agent 5.

Once sewing work is carried out by using a sewing machine under the condition that the sponge plate 2 is attached on the base structure 4, it is difficult to tie a yarn to a sponge, and the yarn is liable to slide due to a smooth surface of the sponge. To solve this problem, the gauze 3 is attached on the bottom of the thin sponge plate 2 by the adhesive agent 5, thereby facilitating sewing work.

Effects of the metal effect pile fabric according to the present invention will be described below.

The metal effect pile yarn 1 may have various kinds of colors. For example there may be a gold metal pile yarn, silver metal pile yarn, blond metal pile yarn, and steel metal pile yarn etc. in the metal effect pile yarn 1. The metal effect pile fabric A is made by connecting these metal effect pile yarns to the base structure 4.

In the present invention, the metal effect pile fabric A is formed by cutting the metal effect pile yarn 1. A commercial value of a sewn toy using this metal effect pile yarn 1 becomes increased because of various color and various glosses.

This sewn toy made of the metal pile fabric A has various colors and various glosses according to a reflected ray and an illumination state.

In addition, an external surface of the sewn toy has a specific touch.

As described above, a sewn toy using the metal effect pile fabric has various colors and various shapes according to an angle and a position of the reflected rays, as well as the illumination by lamp.

According to a selected kind of the metal pile yarn, a different color and a different specular surface appear. According to the shape of the metal pile fiber yarn, a refraction state and a shape of a light are differently shown, thereby increasing a commercial value of the sewn toy.

It is understood that various other modifications will be apparent to and can be readily made by those skilled in the art without departing from the scope and spirit of the invention.

Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art which this invention pertains.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A metal-pile fabric for a sewn toy comprising:
a woven base organization (4) made of a general fiber yarn, and
a metal effect pile yarn (1) which is made of a polyester and nylon and knotted in said woven base organization (4).

2. A metal-pile fabric for a sewn toy according to claim 1, wherein a thin sponge plate 2 is attached on a back side of said base organization (4) to prevent said metal effect pile yarn (1) from being removed from said base organization (4).

3. A metal-pile fabric for a sewn toy according to claim 2, wherein a gauze (3) is attached to the bottom of the sponge plate (2) by an adhesive agent (5) to prevent a sliding in sewing and to maintain stable sewing.

4. A metal-pile fabric for a sewn toy according to claim 2, wherein said adhesive agent (5) is a resin film attached to the bottom of said sponge plate (2).

5. A metal-pile fabric for a sewn toy according to claim 1, wherein said metal effect pile yarn (1) is a flat type of a thin thickness.

6. A metal-pile fabric for a sewn toy according to claim 5, wherein said metal effect pile yarn (1) of a flat type is a gold metal pile yarn.

7. A metal-pile fabric for a sewn toy according to claim 5, wherein said metal effect pile yarn (1) of a flat type is of various colors.

8. A metal-pile fabric for a sewn toy according to claim 1, wherein said metal effect pile yarn (1) is made up of a polyester film and a nylon monofilament 20 Denier.

## Patentansprüche

1. Ein Stoff mit einem metallischen Polgewebe für ein genähtes Spielzeug, welcher
eine gewebte Basisstruktur (4), hergestellt aus einem gewöhnlichen Fasergarn, und ein Metalleffekt-Polgarn (1), das aus Polyester und Nylon hergestellt und mit der gewebten Basisstruktur (4) verknotet ist, aufweist.

2. Ein Stoff mit einem metallischen Polgewebe für ein genähtes spielzeug gemäß Anspruch 1, wobei eine dünne Schwammplatte (2) an der Rückseite der genannten Basisstruktur (4) angebracht ist, um zu verhindern, dass das Metalleffekt-Polgarn (1) sich von der genannten gewebten Basisstruktur (4) löst.

3. Ein Stoff mit einem metallischen Polgewebe für ein genähtes Spielzeug gemäß Anspruch 2, wobei eine Gaze (3) an der Unterseite der Schwammplatte (2) mittels eines Klebers (5) angebracht ist, um ein verschieben während des Nähens zu verhindern und ein gleichmäßiges Nähen aufrechtzuerhalten.

4. Ein Stoff mit einem metallischen Polgewebe für ein genähtes Spielzeug gemäß Anspruch 2, wobei der genannte Kleber (5) ein Harzfilm ist, der an der Unterseite der genannten Schwammplatte (2) aufgebracht ist.

5. Ein Stoff mit einem metallischen Polgewebe für ein genähtes Spielzeug gemäß Anspruch 1, wobei das genannte Metalleffekt-Polgarn (1) vom flachen Typ mit geringer Dicke ist.

6. Ein stoff mit einem metallischen Polgewebe für ein genähtes Spielzeug gemäß Anspruch 5, wobei das genannte Metalleffekt-Polgarn (1) vom flachen Typ ein Goldmetall-Polgarn ist.

7. Ein Stoff mit einem metallischen Polgewebe für ein genähtes Spielzeug gemäß Anspruch 5, wobei das genannte Metalleffekt-Polgarn (1) vom flachen Typ verschiedene Farben aufweist.

8. Ein Stoff mit einem metallischen Polgewebe für ein genähtes Spielzeug gemäß Anspruch 1, wobei das genannte Metalleffekt-Polgarn (1) aus einem Polyesterfilm und einem Nylonfaden von 20 Dernier hergestellt ist.

## Revendications

1. Tissu à poils à effet métallique pour jouet cousu, comprenant :
un arrangement de base tissé (4) fait d'un fil de fibres ordinaire, et
un fil pour la couche de poils à effet métallique (1) qui est fait d'un polyester et de nylon et qui est noué dans ledit arrangement de base tissé (4).

2. Tissu à poils à effet métallique pour jouet cousu selon la revendication 1, dans lequel une mince plaque d'éponge (2) est fixée à la face arrière dudit arrangement de base (4) pour empêcher ledit fil de la couche de poils à effet métallique (1) d'être enlevé dudit arrangement de base (4).

3. Tissu à poils à effet métallique pour jouet cousu selon la revendication 2, dans lequel une gaze (3) est fixée à l'arrière de la plaque d'éponge (2) par un agent adhésif (5) pour empêcher un glissement pendant la couture et maintenir la couture stable.

4. Tissu à poils à effet métallique pour jouet cousu selon la revendication 2, dans lequel ledit agent adhésif (5) est un film de résine fixé à l'arrière de ladite plaque d'éponge (2).

5. Tissu à poils à effet métallique pour jouet cousu selon la revendication 1, dans lequel ledit fil de la couche de poils à effet métallique (1) est d'un type plat de mince épaisseur.

6. Tissu à poils à effet métallique pour jouet cousu selon la revendication 5, dans lequel ledit fil de la couche de poils à effet métallique (1) d'un type plat est un fil à effet métallique doré.

7. Tissu à poils à effet métallique pour jouet cousu selon la revendication 5, dans lequel ledit fil de la couche de poils à effet métallique (1) d'un type plat est de diverses couleurs.

8. Tissu à poils à effet métallique pour jouet cousu selon la revendication 1, dans lequel ledit fil de la couche de poils à effet métallique (1) est fait d'un film de polyester et d'un monofilament de nylon de 20 deniers.
